# EUROPÄISCHE PATENTSCHRIFT

(11) **EP 1 920 876 B1**
(45) Veröffentlichungstag und Bekanntmachung des Hinweises auf die Patenterteilung: **17.06.2009**
(21) Anmeldenummer: 07018548.3
(22) Anmeldetag: 21.09.2007
(51) Int. Cl.: B23Q 1/34, B23Q 1/70

(54) **Träger für eine Werkzeugspindel**
Support for a tool shaft
Support pour une broche d'outil

(30) Priorität: 11.11.2006 DE 202006017265 U
(43) Veröffentlichungstag der Anmeldung: 14.05.2008
(73) Patentinhaber: Thielenhaus Technologies GmbH, 42285 Wuppertal (DE)
(72) Erfinder: Steinwender, Holger, 42289 Wuppertal (DE)
(74) Vertreter: Albrecht, Rainer Harald

(56) Entgegenhaltungen:
- EP-A- 1 329 289
- DE-A1- 19 805 449
- JP-A- 1 246 609
- US-A1- 2003 213 135
- US-B1- 6 484 602

## Beschreibung

Die Erfindung betrifft eine Vorrichtung zur Finishbearbeitung gemäß dem Oberbegriff des Anspruchs 1, wie aus der EP-A-1 329 289 bekannt..

Ein aus Blattfedern gebildeter Träger, mit dem bei einer Vorrichtung zur Finishbearbeitung eine Werkzeugspindel an einer Zustelleinrichtung befestigt ist, ist aus der Druckschrift EP 1 329 289 A2 bekannt. Durch die Finishbearbeitung werden Maßabweichungen und Unrundheiten eines Werkstücks beseitigt und eine glatte Werkstückoberfläche erzeugt. Um bei der Finishbearbeitung eine geringe Oberflächenrauhigkeit und hohe Maßhaltigkeit zu erzielen ist gemäß der Lehre der EP 1 329 289 A2 zwischen der Werkzeugspindel und der Zustelleinrichtung, die über die Blattfedern verbunden sind, eine im Wesentlichen deformationsfrei arbeitende Kraftmesseinrichtung zur Bestimmung der bei der Werkstückbearbeitung auf die Werkzeugspindel wirkenden Andrückkraft angeordnet. Die Blattfedern sollen dabei in Zustelleinrichtung elastisch und senkrecht dazu möglichst steif ausgeführt sein. Die Steifigkeit des aus den Blattfedern gebildeten Trägers bezüglich der Bewegung in unerwünschte Richtungen ist im Hinblick auf eine hoch präzise Finishbearbeitung verbesserungsbedürftig.

Der Erfindung liegt die Aufgabe zugrunde, Vorrichtung zur Finishbearbeitung anzugeben mit einem Träger für eine Werkzeugspindel, der einerseits an der Werkzeugspindel und andererseits an einer Zustelleinrichtung befestigbar ist, der zumindest in einer Vorzugsrichtung elastisch verformbar ist und bezüglich der Bewegungen in eine unerwünschte Richtung eine hohe Steifigkeit aufweist. Insbesondere soll der Träger eine genaue Bestimmung der wirkenden Andrückkraft und/oder eine Feinverstellung der Spindelachse der Werkzeugspindel ermöglichen.

Lösung der Aufgabe ist ein Träger für eine Werkzeugspindel, der einen ersten und einen zweiten Abschnitt aufweist, wobei die Abschnitte über einstückig angeformte und elastisch verformbare Stege miteinander verbunden sind, wobei die elastischen Stege eine Relativbewegung der Abschnitte in zumindest einer Richtung einer Ebene ermöglichen und wobei die Stege senkrecht zu der Ebene steif sind. Die Verformbarkeit der Stege wird dabei durch deren Länge und Breite in der Ebene sowie deren Dicke in senkrechter Richtung bestimmt. Um eine ausreichende Elastizität in zumindest einer Richtung der Ebene zu ermöglichen, weisen die Stege üblicherweise eine geringe Breite auf. Eine hohe Steifigkeit senkrecht zu der Ebene wird dabei durch eine vergleichsweise große Dicke der Stege erreicht. Die einzelnen Stege, die auch als Feststoffgelenke bezeichnet werden, können im Rahmen der Erfindung derart angeordnet sein, dass in der Ebene eine lineare Relativbewegung oder auch ein Verkippen der Abschnitte ermöglicht wird. Die Anzahl und Anordnung der Stege kann im Rahmen der Erfindung entsprechend der jeweiligen Erfordernisse des konkreten Anwendungsfalls frei gewählt werden.

Zur Bestimmung der von der Zustelleinrichtung über den Träger auf die Werkzeugspindel ausgeübte Andrückkraft F ist vorgesehen, dass zwischen dem ersten und dem zweiten Abschnitt zumindest eine Kraftmesseinrichtung angeordnet ist. Der Träger gewährleistet eine praktisch spielfreie Kraftübertragung von der Zustelleinrichtung auf die Werkzeugspindel und ist so im besonderen Maße für die genaue Kraftbestimmung bei einer Finishbearbeitung geeignet, wobei zwischen den Abschnitten beispielsweise ein Piezoelement als Kraftmesseinrichtung eingesetzt werden kann. Zusätzlich oder alternativ kann zwischen dem ersten und dem zweiten Abschnitt auch zumindest ein Stellelement zur relativen Positionierung der Abschnitte in der Ebene vorgesehen sein. Das zumindest eine Stellelement, welches beispielsweise als piezoelektrischer Aktuator ausgeführt sein kann, ermöglicht insbesondere auch während der Bearbeitung eines Werkstückes mit einem an der Werkzeugspindel angeordneten Werkzeug je nach Anordnung entweder feine Zustellbewegungen in Richtung der Spindelachse der Werkzeugspindel oder eine Feinverstellung der Spindelachse. Erfindungsgemäß wird durch den Träger dabei eine exakte Feinverstellung ermöglicht, die mit aus dem Stand der Technik bekannten Verstelleinrichtungen nicht erreicht werden kann. Bei der Anordnung von zumindest zwei Stellelementen ist bei der Bearbeitung sowohl eine Verschiebung senkrecht zur Spindelachse als auch ein Verkippen der Spindelachse möglich.

Mit dem erfindungsgemäßen Träger kann auch ein Werkstückhalter oder vorzugsweise eine Werkstückspindel an einem Maschinenaufbau oder einer separaten Zustelleinrichtung befestigt werden, wobei der Träger bei einer solchen Anordnung ohne Einschränkung mit zumindest einer Kraftmesseinrichtung und/oder einem Stellelement versehen sein kann. In einer besonders bevorzugten Ausgestaltung der Erfindung ist vorgesehen, dass einerseits die Spindelachse der Werkzeugspindel und andererseits eine Spindelachse einer Werkstückspindel jeweils über einen mit zumindest einem Stellelement ausgerüsteten Träger feinverstellbar sind.

Im Rahmen der Erfindung ist der Träger als Trägerplatte ausgebildet, wobei die elastischen Stege eine Relativbewegung in zumindest einer Richtung der Plattenebene ermöglichen. Dabei, ist der als Trägerplatte ausgeführte Träger einstückig aus einem Vollmaterial, beispielsweise durch Fräsen, gefertigt. Der erste Abschnitt und der zweite Abschnitt der Trägerplatte sind dabei, beispielsweise durch Verschraubungen an der Werkzeugspindel bzw. der Zustelleinrichtung befestigbar.

In einer alternativen Ausgestaltung der Erfindung ist vorgesehen, dass einer der Abschnitte als Körper mit einer Aufnahme für die Werkzeugspindel ausgebildet ist, wobei die Werkzeugspindel in die Aufnahme einsetzbar und beispielsweise durch eine Klemmung fixierbar ist.

Im Rahmen der Erfindung ist der zweite Abschnitt vorzugsweise rahmenförmig von dem ersten Abschnitt umgeben, wobei zwischen den Abschnitten ein Spalt verläuft, der die Relativbewegung der Abschnitte zueinander begrenzt. Insbesondere bei einer hoch präzisen Finishbearbeitung sind minimale Relativbewegungen zur Bestimmung der Andrückkraft F und zur Feinjustage der Spindelachse ausreichend, so dass bei solchen Anwendungen der zwischen den Abschnitten verlaufende Spalt bevorzugt eine Spaltbreite von weniger als 1 mm aufweist. Der zwischen den Abschnitten verlaufende Spalt kann dabei mit einer besonders hohen Genauigkeit durch Drahterodieren, Wasserstrahlschneiden oder Laserschneiden erzeugt werden.

Die Erfindung wird im Folgenden anhand einer lediglich ein Ausführungsbeispiel darstellenden Zeichnung erläutert. Es zeigen:
- Fig. 1: eine Vorrichtung zur Finishbearbeitung mit einem erfindungsgemäßen Träger,
- Fig. 2 bis Fig. 4: alternative geometrische Ausgestaltungen des Trägers in einer schematischen Darstellung,
- Fig. 5a, 5b: eine erste bevorzugte Ausgestaltung des Trägers,
- Fig. 6a bis c: eine zweite bevorzugte Ausgestaltung des Trägers.

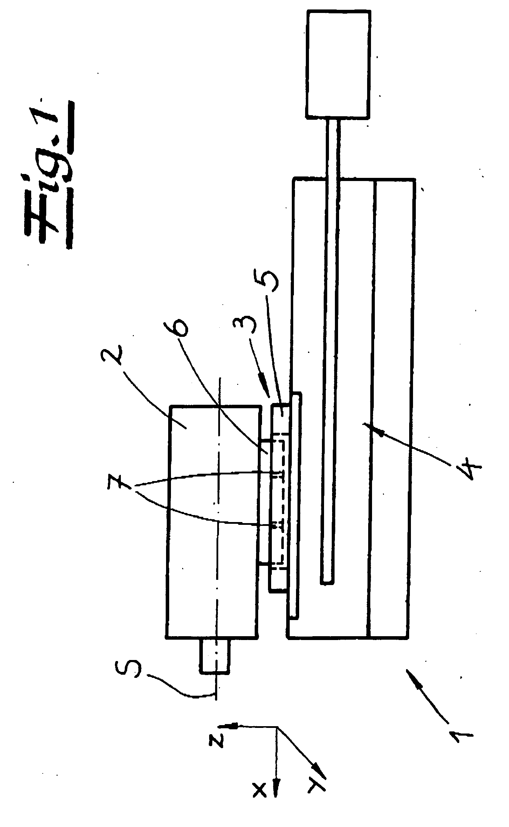

Fig. 1 zeigt eine Vorrichtung 1 zur Finishbearbeitung von Werkstücken W, wobei eine Werkzeugspindel 2 über einen Träger 3 an einer in x-Richtung verfahrbaren Zustelleinrichtung 4 befestigt ist. Der Träger 3 weist einen ersten Abschnitt 5 und einen zweiten Abschnitt 6 auf. Die Abschnitte 5, 6 sind über einstückig angeformte und elastisch verformbare Stege 7 miteinander verbunden, wobei die elastischen Stege 7 eine Relativbewegung der Abschnitte 5, 6 in x-Richtung ermöglichen und wobei die Stege 7 senkrecht dazu in z-Richtung steif sind.

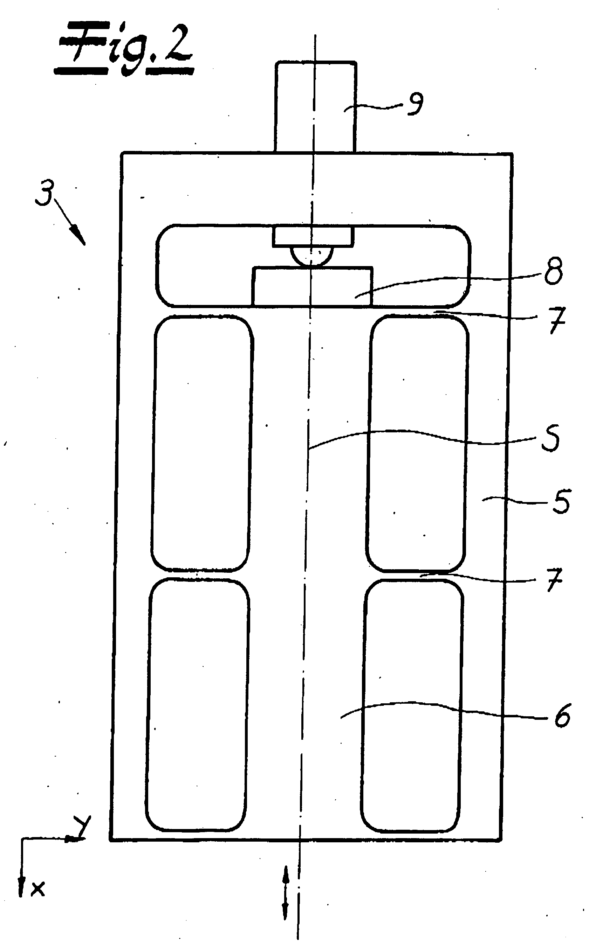

Bei dem in Fig. 2 schematisch dargestellten Träger 3 ist der zweite Abschnitt 6 innerhalb des ersten Abschnitts 5 angeordnet, wobei die Abschnitte 5, 6 über in y-Richtung verlaufende Stege 7 miteinander verbunden sind. Die Stege 7 sind dabei derart angeordnet, dass der zweite, an einer Werkzeugspindel 2 befestigbare Abschnitt 6 gegenüber dem ersten, an einer Zustelleinrichtung 4 befestigbaren Abschnitt 5 in x-Richtung über die Stege 7 beweglich ist, wobei die Spindelachse S der Werkzeugspindel 2 typischerweise in x-Richtung verläuft. Zwischen dem ersten Abschnitt 5 und dem zweiten Abschnitt 6 sind eine Kraftmesseinrichtung 8 und ein Stellelement 9 zur Positionierung derart angeordnet, dass der zweite Abschnitt 6 gegenüber dem ersten Abschnitt 5 in x-Richtung bewegbar ist, wobei auch die in x-Richtung wirkende Andrückkraft F von der Kraftmesseinrichtung 8 erfasst wird.

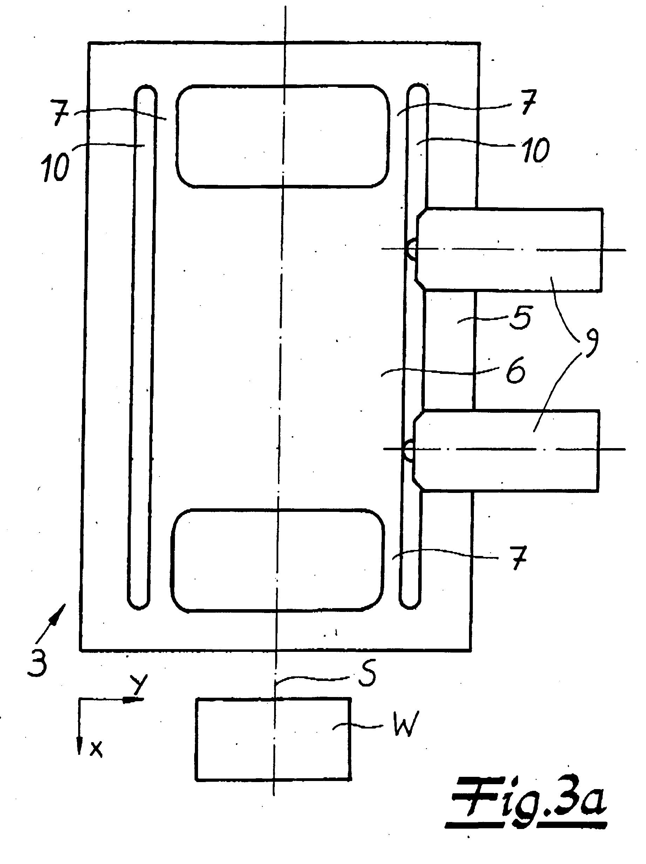

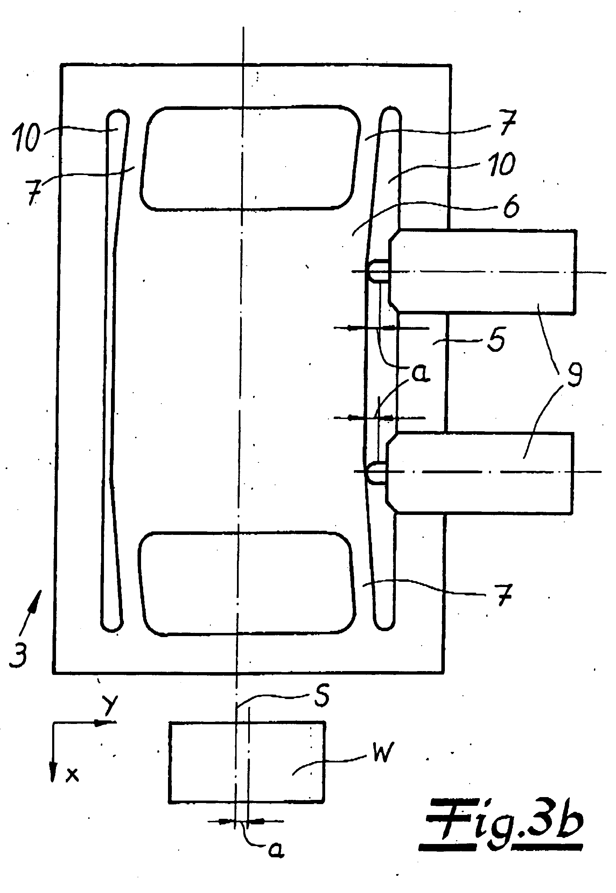

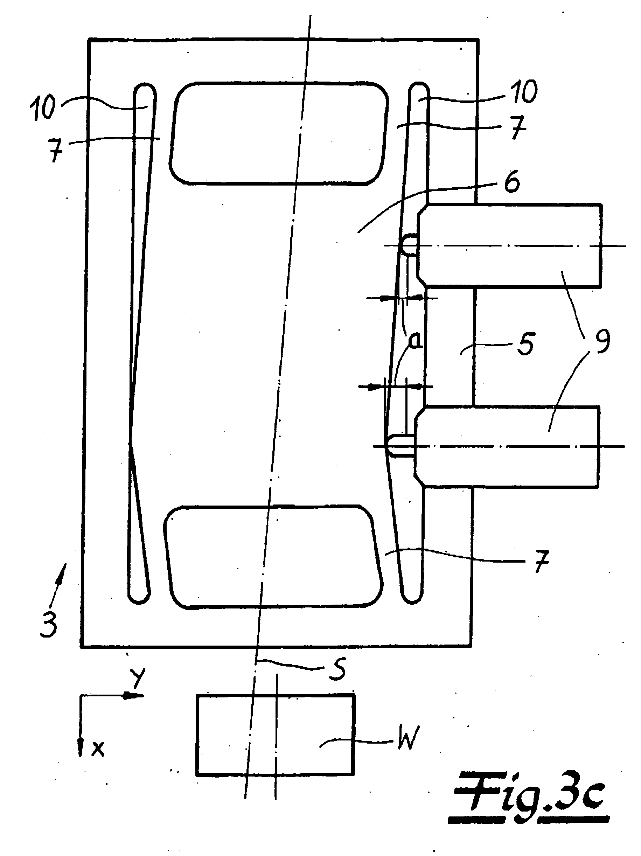

Fig. 3a zeigt eine alternative Ausgestaltung des Trägers 3, wobei der erste Abschnitt 5 den zweiten Abschnitt 6 rahmenförmig umgibt und wobei zwischen den Abschnitten 5, 6 ein die Relativbewegung begrenzender Spalt 10 verläuft. Die Stege 7 verlaufen in x-Richtung, so dass der zweite Abschnitt 6 gegenüber dem ersten Abschnitt 5 im Wesentlichen in y-Richtung verstellbar ist, wobei seitlich des zweiten Abschnittes 6 in y-Richtung wirkende Stellelemente 9 vorgesehen sind. Fig. 3b zeigt die Anordnung gemäß 3a, wobei beide Stellelemente 9 um den gleichen Abstand a verstellt sind, so dass die in x-Richtung verlaufende Spindelachse S um den Abstand a parallel verschoben ist. Wie Fig. 3c zeigt, bewirkt eine unterschiedliche Verstellung der beiden Stellelemente 9 ein Verkippen der Spindelachse S der Werkzeugspindel 2.

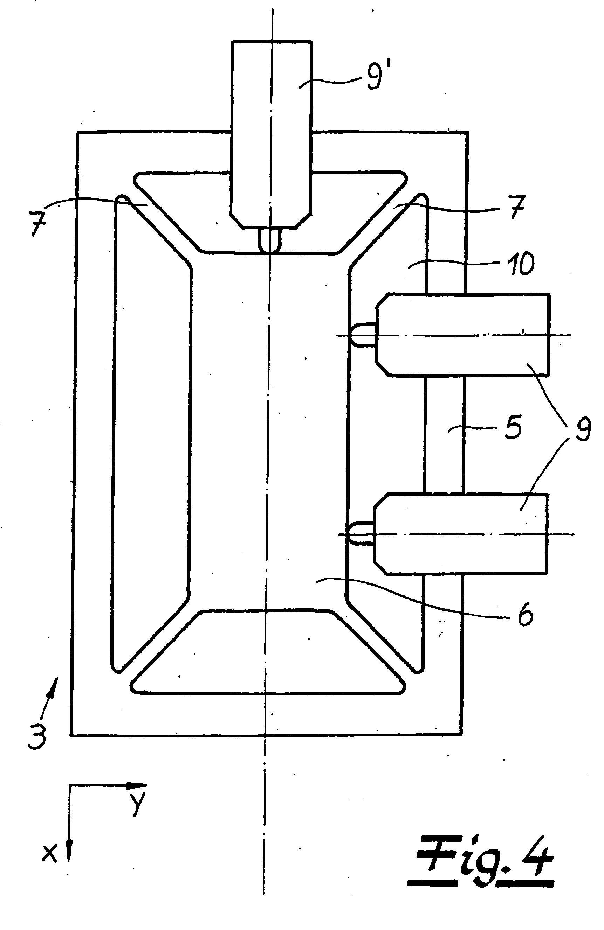

Fig. 4 zeigt eine Ausgestaltung, bei der der erste Abschnitt 5 des rechteckigen Trägers 3 den zweiten Abschnitt 6 rahmenförmig umgibt und wobei die Abschnitte 5, 6 durch schräg verlaufende Stege 7 verbunden sind. Sowohl zur Bewegung des zweiten Abschnittes 6 in x-Richtung als auch zur Verschiebung und Verkippung in y-Richtung sind Stellelemente 9, 9' vorgesehen. Die Stellelemente 9, 9' sind bevorzugt als Piezo-Aktuatoren ausgeführt und können ohne Einschränkung, wie in Fig. 2 dargstellt, mit Kraftmesselementen kombiniert werden.

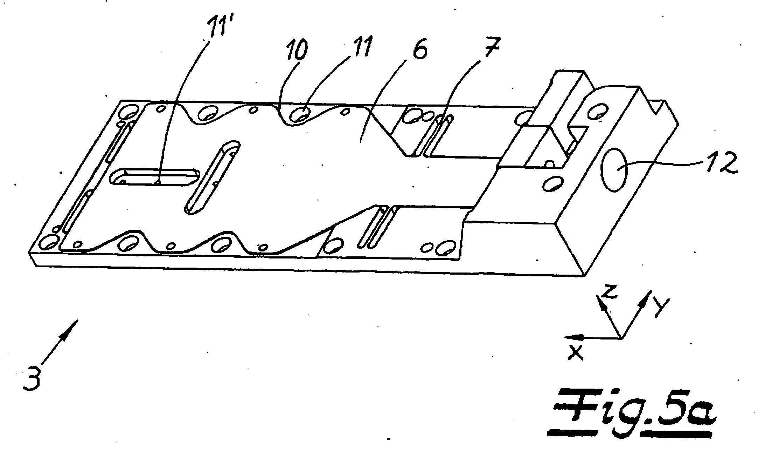

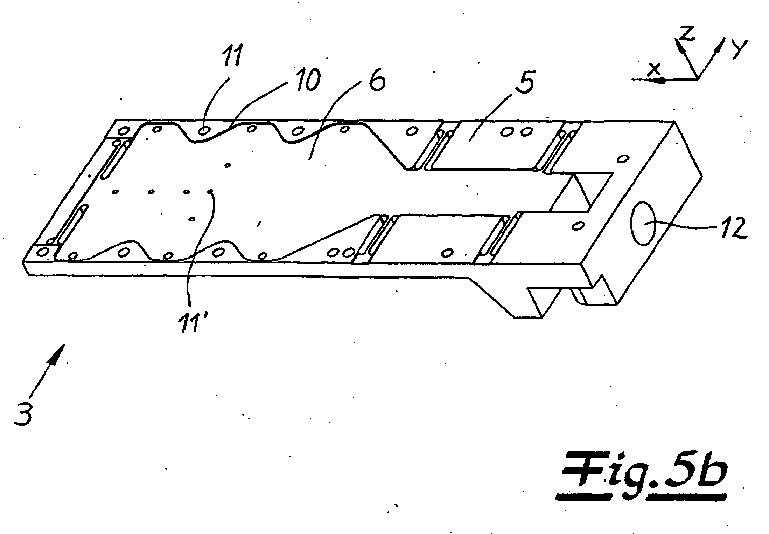

Fig. 5a und 5b zeigen eine erste bevorzugte Ausgestaltung des Trägers 3 in einer Ansicht von oben bzw. von unten. Der Träger 3 ist als Trägerplatte ausgebildet, wobei der erste Abschnitt 5 Bohrungen 11 zur Befestigung an einer Zustelleinrichtung 4 aufweist. Der innerhalb des ersten Abschnittes 5 angeordnete zweite Abschnitt 6 ist von einem Spalt 10, der die Relativbewegung der Abschnitte 5, 6 zueinander begrenzt, umgeben und weist Bohrungen 11' zur Befestigung an einer Werkzeugspindel 2 auf. Die Abschnitte 5, 6 sind über schmale elastische Stege 7 verbunden, die eine Relativbewegung der Abschnitte 5, 6 in x-Richtung ermöglichen. Der gesamte als Trägerplatte ausgeführte Träger 3 ist einstückig aus einem Vollmaterial gefertigt, wobei der Spalt 10 vorzugsweise durch Drahterodieren, Wasserstrahlschneiden oder Laserschneiden erzeugt ist. Da bei einer Finishbearbeitung lediglich geringe Relativbewegungen zwischen den Abschnitten 5, 6 ausreichend sind, weist der Spalt 10 eine Spaltbreite von weniger als 1 mm auf. Der erste Abschnitt 5 weist eine Öffnung 12 auf, um eine in x-Richtung wirkende Kraftmesseinrichtung 8 und/oder ein Stellelement 9 aufzunehmen.

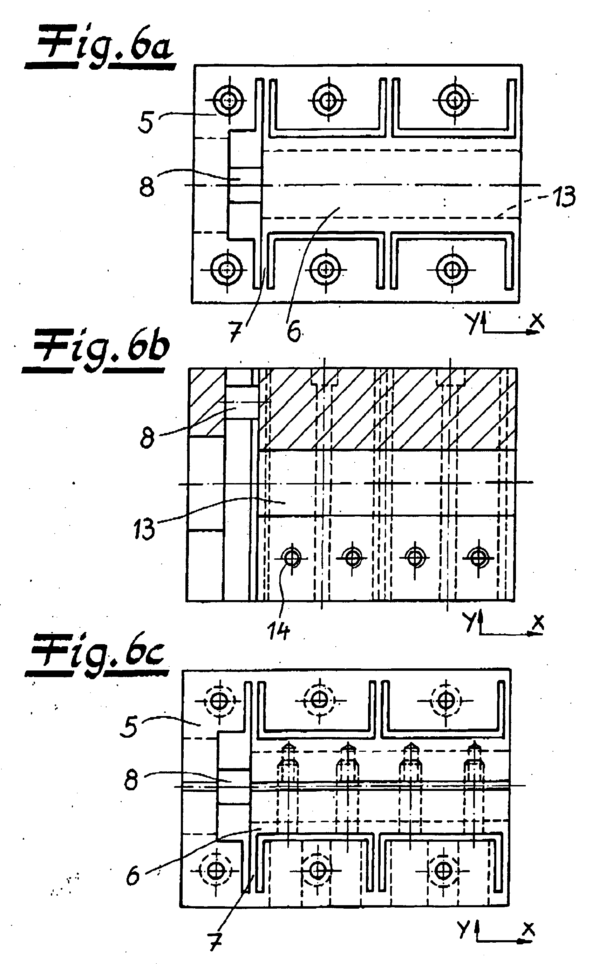

Fig. 6a bis c zeigt eine alternative Ausgestaltung des Trägers 3, wobei der zweite Abschnitt 6 als Körper mit einer Aufnahme 13 für eine Werkzeugspindel 2 ausgebildet ist. Die Aufnahme 13 ist geschlitzt und weist Schraubenaufnahmen 14 zur klemmenden Fixierung der Werkzeugspindel 2 auf. Die Stege 7 zwischen dem ersten Abschnitt 5 und dem zweiten Abschnitt 6 sind derart angeordnet, dass sie eine Relativbewegung in x-Richtung ermöglichen. Eine Kraftmesseinrichtung 8 zur Bestimmung der Andrückkraft F ist zwischen den Abschnitten 5, 6 angeordnet.

## Patentansprüche

1. Vorrichtung zur Finishbearbeitung von Werkstücken mit
einer Werkzeugspindel (2),
einer in einer Bewegungsrichtung (X) verfahrbaren Zustelleinrichtung (4) und
einem Träger (3) zur Befestigung der Werkzeugspindel (2) an der Zustelleinrichtung (4), **dadurch gekennzeichnet, daß**
der Träger (3) aus einer einstückig aus Vollmaterial gefertigten Trägerplatte besteht, die einen ersten, an der Zustelleinrichtung befestigten Abschnitt (5) sowie einen zweiten, an der Werkzeugspindel (2) befestigten Abschnitt (6) aufweist, wobei die beiden Abschnitte (5, 6) über einstückig angeformte und elastisch verformbare Stege (7) miteinander verbunden sind, wobei die elastischen Stege (7) eine Relativbewegung der Abschnitte (5, 6) in der Plattenebene in der Bewegungsrichtung (X) in der Zustelleinrichtung (4) ermöglichen und senkrecht zu der Plattenebene steif sind und wobei zwischen dem ersten Abschnitt (5) und dem zweiten Abschnitt (6) zumindest eine Kraftmesseinrichtung (8) angeordnet ist.

2. Vorrichtung nach Anspruch 1, **dadurch gekennzeichnet, dass** der erste Abschnitt (5) des Trägers den zweiten Abschnitt (6) des Trägers rahmenförmig umgibt, wobei zwischen den Abschnitten (5, 6) ein die Relativbewegung begrenzender Spalt (10) verläuft.

3. Vorrichtung nach Anspruch 2, **dadurch gekennzeichnet, dass** der Spalt (10) eine Spaltbreite von weniger als 1 mm aufweist.

4. Vorrichtung nach Anspruch 2 oder 3, **dadurch gekennzeichnet, dass** der Spalt (10) durch Drahterodieren, Wasserstrahlschneiden oder Laserschneiden erzeugt ist.

## Claims

1. An apparatus for finish machining workpieces, with
a tool spindle (2),
a positioning device (4) which can be moved in a movement direction (X) and
a carrier (3) for fastening the tool spindle (2) to the positioning device (4), **characterised in that**
the carrier (3) consists of a carrier plate which is manufactured in one piece from solid material and has a first section (5) which is fastened to the positioning device and a second section (6) which is fastened to the tool spindle (2), wherein the two sections (5, 6) are connected to each other by means of integrally formed and elastically deformable webs (7), wherein the elastic webs (7) allow a relative movement of the sections (5, 6) in the positioning device (4) in the movement direction (X) in the plate plane and are rigid perpendicularly to the plate plane, and wherein at least one force-measuring device (8) is arranged between the first section (5) and the second section (6).

2. The apparatus according to Claim 1, **characterised in that** the first section (5) of the carrier surrounds the second section (6) of the carrier in a frame-like manner, wherein a gap (10) which limits the relative movement runs between the sections (5, 6).

3. The apparatus according to Claim 2, **characterised in that** the gap (10) has a width of less than 1 mm.

4. The apparatus according to Claim 2 or 3, **characterised in that** the gap (10) is produced by wire-cut electrical discharge machining, water jet cutting or laser cutting.

## Revendications

1. Dispositif pour le traitement de finition de pièces comprenant
une broche d'outil (2),
un dispositif d'approche (4) déplaçable dans une direction de déplacement (X) et
un support (3) pour la fixation de la broche d'outil (2) sur le dispositif d'approche (4),
**caractérisé en ce que** le support (3) est constitué d'une plaque support fabriquée d'une seule pièce dans un matériau plein, qui présente une première partie (5) fixée sur le dispositif d'approche et une seconde partie (6) fixée sur la broche d'outil (2), les deux parties (5, 6) étant reliées l'une à l'autre au moyen de barrettes (7) formées dessus d'une seule pièce et déformables élastiquement, les barrettes (7) élastiques permettant un déplacement relatif des parties (5, 6) dans le plan de plaque dans la direction de déplacement (X) dans le dispositif d'approche (4) et étant rigides perpendiculairement au plan de plaque et au moins un dispositif de mesure de force (8) étant disposé entre la première partie (5) et la seconde partie (6).

2. Dispositif selon la revendication 1, **caractérisé en ce que** la première partie (5) du support entoure en forme de cadre la seconde partie (6) du support, une fente (10) délimitant le déplacement relatif étant agencée entre les parties (5, 6).

3. Dispositif selon la revendication 2, **caractérisé en ce que** la fente (10) présente une largeur de fente de moins de 1 mm.

4. Dispositif selon la revendication 2 ou 3, **caractérisé en ce que** la fente (10) est générée par découpage par fil, découpage au jet d'eau ou découpage au laser.
